# FASCICULE DE BREVET EUROPEEN

(11) **EP 2 102 032 B1**
(45) Date de publication et mention de la délivrance du brevet: **03.11.2010**
(21) Numéro de dépôt: 07847775.9
(22) Date de dépôt: 04.12.2007
(51) Int. Cl.: B60Q 1/04, B60R 19/24

(54) **AGENCEMENT DE MOYENS DE SUPPORT D'UN BOUCLIER DE VEHICULE AUTOMOBILE**
STÜTZMITTELANORDNUNG FÜR EINEN KRAFTFAHRZEUGSTOSSFÄNGER
ARRANGEMENT OF SUPPORT MEANS FOR A MOTOR VEHICLE BUMPER

(30) Priorité: 05.12.2006 FR 0655317
(43) Date de publication de la demande: 23.09.2009
(73) Titulaire: Renault s.a.s., 92100 Boulogne-Billancourt (FR)
(72) Inventeur: GAULTIER, Christophe, 78125 Vieille Eglise en Yvelines (FR); MICHALSKI, Thierry, 28230 Droue sur Drovette (FR)
(86) Numéro de dépôt international: PCT/EP2007/063273
(87) Numéro de publication internationale: WO 2008/068253

(56) Documents cités:
- EP-A1- 1 232 932
- EP-A1- 1 529 686
- WO-A-02/22396
- WO-A-2006/120359
- FR-A1- 2 879 979

## Description

L'invention concerne un agencement de moyens de support d'un bouclier de véhicule automobile, dans lequel lesdits moyens de support sont portés par un projecteur, constitué par un boîtier muni d'une glace et solidaire d'un élément de structure du véhicule.

L'agencement des éléments d'accessoires d'un bloc avant d'un véhicule, tels que le bouclier est rendue difficile en raison des contraintes techniques et économiques liées au montage.

Il est en effet nécessaire de prévoir des jeux de montage, de façon à pouvoir monter ensemble tous les différents éléments. Il est en particulier prévu un jeu entre le projecteur et le bouclier. Cependant, ces jeux de montage ne sont pas toujours les mêmes d'un véhicule à l'autre. Il existe de plus des contraintes esthétiques qui participent également à complexifier le montage. Ainsi, plus les jeux sont réduits en tolérance et plus ils participent à l'esthétique et à la qualité perçue.

La publication FR-A-2871432 décrit un agencement pour le montage d'un bouclier dans lequel un boîtier de projecteur comporte des moyens de support du bouclier. Ce dispositif permet bien d'assurer un jeu entre le projecteur et le bouclier. Cependant, le positionnement du bouclier par rapport au projecteur est dépendant du positionnement de la glace de projecteur par rapport à son boîtier. Il peut ainsi y avoir des décalages gênants et inesthétiques entre la glace de projecteur et le bouclier, nécessitant alors une mise au point géométrique complexe ce qui peut alors augmenter la durée du procédé de montage.

Un ensemble comprenant un projecteur et des moyens de support de bouclier selon le préambule de la revendication 1 est connu de EP-A-1 529 686.

Afin de pallier ces inconvénients, l'invention a pour objet un agencement de moyens de support d'un bouclier de véhicule automobile permettant de manière simple et peu onéreuse, le bon positionnement du bouclier par rapport au projecteur.

L'invention a aussi pour objet un agencement autorisant des jeux de montage réduits, une faible dispersion des jeux.

L'invention a en outre pour objet un agencement dans lequel le montage est rapide et robuste.

A cet effet, l'invention propose un ensemble comprenant un projecteur et des moyens de support d'un bouclier de véhicule automobile selon les caractéristiques de la revendication 1.

Selon d'autres caractéristiques de l'invention:
- La fixation entre le support et la glace est constituée par une vis destinée à être reçue dans un trou ménagé dans une première patte s'étendant sensiblement vers le bas depuis le rebord de la glace et dans un fût taraudé, sensiblement longitudinal et dirigé vers l'avant, porté par une deuxième patte s'étendant vers le bas depuis la face inférieure du support.
- Le fût est encadré par deux ailettes de rigidification du support, d'orientation sensiblement longitudinale.
- Un rebord supérieur du bouclier est reçu dans la rainure, en appui sur la paroi supérieure du support, de manière que le jeu soit ménagé entre le rebord du bouclier et la paroi supérieure de la rainure.
- La paroi supérieure du support comporte des nervures d'orientation sensiblement longitudinale, de manière à assurer l'indexation verticale dudit bouclier.
- Des moyens de fixation à un élément de structure sont prévus en partie centrale et aux extrémités du bouclier.
- La glace est fixée sur le boîtier par des moyens de collage.

D'autres caractéristiques et avantages de l'invention apparaîtront à la lecture de la description d'exemples de réalisation d'un agencement de moyens de support d'un bouclier sur un projecteur en référence aux dessins annexés dans lesquels :
- La figure 1 est une vue de face d'un agencement selon l'invention.
- La figure 2 est une vue de dessous de l'agencement de la figure 1.
- La figure 3 est une coupe latérale d'un détail de l'agencement de la figure 1.

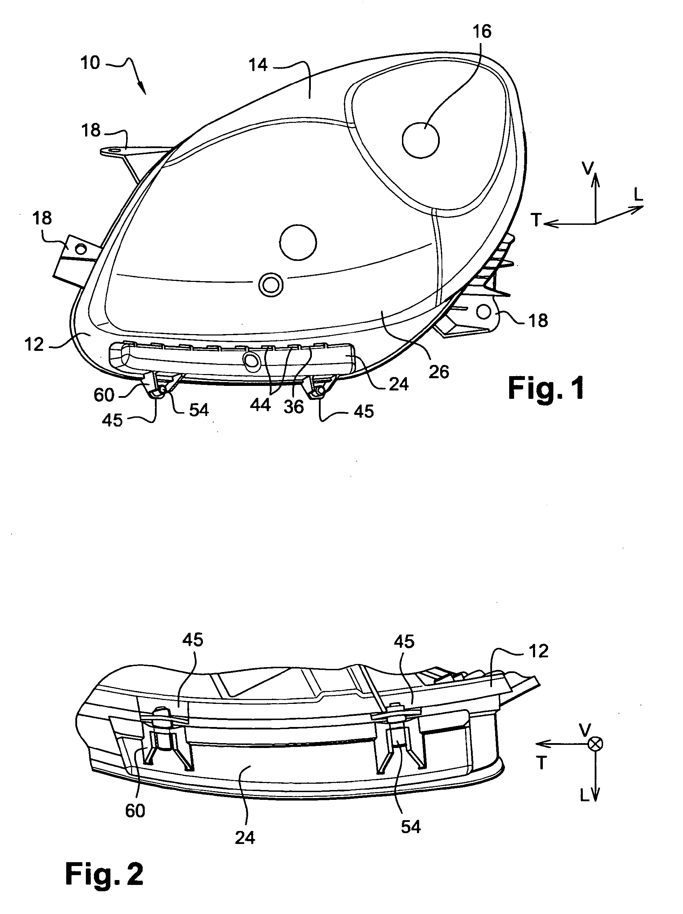

Dans la description qui suit, nous prendrons à titre non limitatif une orientation longitudinale, verticale et transversale indiquée par le trièdre L,V,T des figures 1 à 3.

A l'exception des éléments spécifiques du poste de conduite, le véhicule présente une symétrie générale par rapport à un plan longitudinal médian.

Tel que représenté à la figure 1, un projecteur 10 comporte un boîtier 12 et une glace 14 renfermant des moyens d'éclairage 16.

Le boîtier du projecteur 12 est relié par des moyens de fixation 18 à un élément de structure (non représenté) du véhicule.

Le projecteur 10 comporte également des moyens de support d'un bouclier 22.

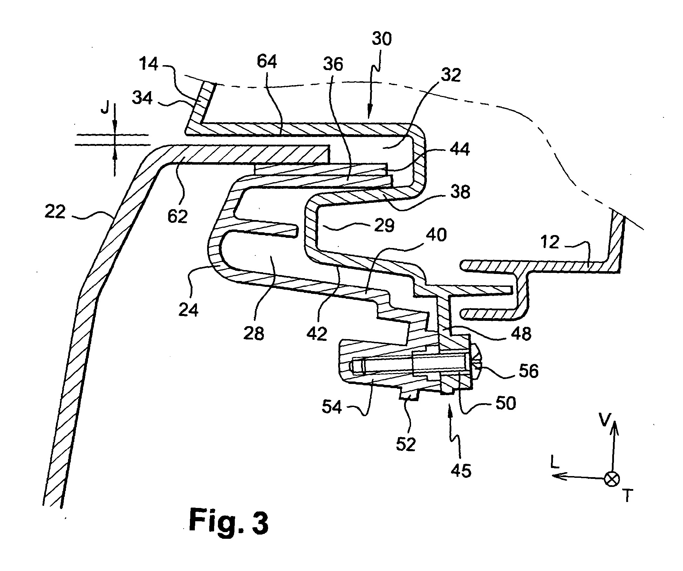

A cette fin, tel que représenté aux figures 2 et 3, une pièce rapportée 24 de support du bouclier 22 est montée sur une partie inférieure 26 de la glace 14 de projecteur 10.

Le support 24 est une pièce en matière plastique présentant un profil en forme de U dont l'ouverture 28 est tournée vers le véhicule.

L'ouverture 28 du support 24 coopère avec une zone d'accrochage 30 du projecteur 10 consistant en un rebord 29 sensiblement horizontal ménagé dans la partie inférieure 26 de la glace 14 de projecteur 10 et formant une rainure 32 sensiblement horizontale avec une partie supérieure 34 de la glace 14.

Une paroi horizontale supérieure 36 du support 24, correspondant à une branche supérieure du U, est en appui sur une face supérieure 38 du rebord 29, tandis qu'une paroi inférieure 40 du support, correspondant à une branche inférieure du U, se situe sous le projecteur 10, à distance d'une face inférieure 42 du rebord 29.

La paroi supérieure 36 du support comporte une pluralité de nervures 44, d'orientation sensiblement longitudinale.

Des moyens de fixation 45 permettent de plus de solidariser la glace 14 et le support 24.

Ainsi, la paroi inférieure 42 de la glace 14 comporte une première patte 48 s'étendant sensiblement verticalement vers le bas, venue de matière et munie d'un trou traversant 50.

La face inférieure 40 du support 24 comporte une deuxième patte 52 s'étendant sensiblement verticalement vers le bas et munie d'un fût 54 sensiblement longitudinal et dirigé vers l'avant du véhicule.

Lorsque le support 24 est monté sur la zone d'accrochage 30 de la glace 14 de projecteur 10, le trou 50 de la première patte 48 et le fût 54 de la deuxième patte 52 se trouvent dans le prolongement l'un de l'autre de façon qu'ils puissent accueillir une vis de fixation 56.

Un taraudage 58 est prévu à l'intérieur du fût 54 de manière à pouvoir y fixer la vis de fixation 58.

Le fût de vissage 54 est encadré par deux ailettes 60 d'orientation sensiblement longitudinale, issue de matière avec le support 24. Les ailettes 60 sont des moyens de rigidification du support 24.

Lorsque le bouclier 22 est en position fixée, un rebord supérieur 62 dudit bouclier 22, s'étend sensiblement horizontalement vers l'arrière du véhicule, à l'intérieur de la rainure 32 et à distance de la paroi supérieure 64 de la rainure 32 de manière à ménager un jeu J entre le projecteur 10 et le bouclier 22. Le rebord 62 du bouclier est alors en appui sur la paroi supérieure 36 du support 24. Les nervures 44 permettent alors d'assurer l'indexation du bouclier 22 selon une direction verticale V, mais aussi de limiter l'appui du bouclier 22.

Ainsi le bouclier 22 est, au niveau des projecteurs 10, en appui sur le support 24 porté par les projecteurs.

Par ailleurs, il est aussi prévu des moyens pour la fixation du bouclier 22 (non représentés): ainsi, les extrémités du bouclier 22 sont reliées à la structure du véhicule et des zones de fixation sont également agencées en partie médiane du bouclier par exemple.

La pièce de support 24 selon l'invention permet ainsi un jeu de montage réduit de l'ordre de 5 millimètres, avec un écart de 0,25 millimètres.

L'agencement peut comporter deux pièces de support 24, situées à chaque extrémité du projecteur, dans le cas où le procédé de moulage de la glace le permet.

La glace 14 est fixée sur le boîtier 12 par des moyens de collage prévus pour que la glace 14 puisse supporter le poids du bouclier ainsi que les efforts exercés sur le bouclier. Le type de colle utilisé peut être alors une colle de type silicone.

Typiquement, les moyens de support sont prévus pour que le bouclier puisse résister à un effort correspondant au poids partiel d'une personne appuyée sur le bouclier 22.

Les moyens de supports sont aussi prévus pour que le bouclier puisse résister à des chocs de l'ordre de 2,5 à 8km/h, ce qui correspond à un petit choc de type dit « parking ».

Ainsi, l'agencement de support de bouclier selon l'invention présente l'avantage de s'affranchir des contraintes liées au réglage de la glace par rapport au boîtier de projecteur.

En effet, les moyens de support portés par la glace sont prévus pour que, après montage, le bouclier et la glace de projecteur soient alors correctement alignés l'un par rapport à l'autre, sans qu'il y ait besoin de prendre en compte les dispersions entre la glace et le boîtier.

## Revendications

1. Ensemble comprenant un projecteur (10) et des moyens de support d'un bouclier (22) de véhicule automobile, le projecteur (10) étant constitué par un boîtier (12) muni d'une glace (14) et solidaire d'un élément de structure du véhicule, une partie inférieure (26) de la glace (14) comportant un rebord (29) formant avec une partie supérieure (34) de la glace (14) une rainure (32), **caractérisé en ce que** les moyens de support de bouclier comportent au moins une pièce de support rapportée (24), présentant un profil en forme de U apte à coopérer avec ledit rebord (29), une paroi supérieure (36) du support (24) étant en appui sur une paroi supérieure (38) du rebord (29) et des moyens de fixation (45) étant en outre prévus pour solidariser la pièce de support (24) et la glace (14), ladite pièce de support rapportée (24) étant apte à autoriser un jeu (J) entre le projecteur (10) et le bouclier (22), ledit bouclier (22) comportant un rebord supérieur (62) pouvant être reçu dans la rainure (32), en appui sur la paroi supérieure (36) du support (24), de manière que le positionnement du bouclier (22) par rapport au projecteur (10) soit indépendant du positionnement de la glace (14) par rapport au boîtier (12).

2. Ensemble selon la revendication précédente, **caractérisé en ce que** la fixation entre le support (24) et la glace (14) est constituée par une vis (56) destinée à être reçue dans un trou (50) ménagé dans une première patte (48) s'étendant sensiblement vers le bas depuis le rebord (29) de la glace (14) et dans un fût (54) taraudé, sensiblement longitudinal et dirigé vers l'avant, porté par une deuxième patte (52) s'étendant vers le bas depuis la face inférieure (40) du support (24).

3. Ensemble selon la revendication précédente, **caractérisé en ce que** le fût (54) est encadré par deux ailettes (60) de rigidification du support (14), d'orientation sensiblement longitudinale.

4. Ensemble selon l'une quelconque des revendications 2 à 3, **caractérisé en ce qu'**un rebord supérieur (62) du bouclier (22) est reçu dans la rainure (32), en appui sur la paroi supérieure (36) du support (24), de manière que le jeu (J) soit ménagé entre le rebord (62) du bouclier (22) et une paroi supérieure (64) de la rainure (32).

5. Ensemble selon la revendication précédente **caractérisé en ce que** la paroi supérieure (36) du support (24) comporte des nervures (44) d'orientation sensiblement longitudinale, de manière à assurer l'indexation verticale dudit bouclier (22).

6. Ensemble selon l'une quelconque des revendications précédentes, **caractérisé en ce que** des moyens de fixation à un élément de structure sont prévus en partie centrale et aux extrémités du bouclier (22).

7. Ensemble selon l'une quelconque des revendications précédentes, **caractérisé en ce que** la glace (14) est fixée sur le boîtier (12) par des moyens de collage.

8. Ensemble selon l'une quelconque des revendications précédentes, **caractérisé en ce que** la paroi supérieure (38) du rebord (29) présente une pente, une extrémité arrière de ladite paroi (38) étant plus haute qu'une extrémité avant de ladite paroi (38).

## Claims

1. Assembly comprising a headlamp (10) and support means for supporting a motor vehicle bumper (22), the headlamp (10) consisting of a unit (12) equipped with a glass (14) and secured to a structural element of the vehicle, a lower part (26) of the glass (14) comprising a rim (29) which, with an upper part (34) of the glass (14) forms a groove (32), **characterized in that** the support means for supporting the bumper comprise at least one attached support piece (24) of U-shaped profile able to collaborate with said rim (29), an upper wall (36) of the support (24) resting against an upper wall (38) of the rim (29), and fastening means (45) also being provided to secure the support piece (24) and the glass (14), the said attached support piece (24) being able to allow clearance (J) between the headlamp (10) and the bumper (22), the said bumper (22) comprising an upper rim (62) that can be housed in the groove (32), resting against the upper wall (36) of the support (24) so that the positioning of the bumper (22) in relation to the headlamp (10) is independent of the positioning of the glass (14) in relation to the unit (12).

2. Assembly according to the preceding claim, **characterized in that** the support (24) and the glass (14) are fastened using a screw (56) intended to be housed in a hole (50) created in a first lug (48) extending substantially downwards from the rim (29) of the glass (14) and in a substantially longitudinal and forward facing tapped barrel (54) borne by a second lug (52) extending downwards from the lower face (40) of the support (24).

3. Assembly according to the preceding claim, **characterized in that** the barrel (54) is flanked by two fins (60) that stiffen the support (14), directed substantially longitudinally.

4. Assembly according to either one of Claims 2 and 3 **characterized in that** an upper rim (62) of the bumper (22) is housed in the groove (32), bearing against the upper wall (36) of the support (24) such that the clearance (J) is created between the rim (62) of the bumper (22) and an upper wall (64) of the groove (32).

5. Assembly according to the preceding claim, **characterized in that** the upper wall (36) of the support (24) has substantially longitudinally directed ribs (44) so as to provide vertical indexing for the said bumper (22).

6. Assembly according to any one of the preceding claims, **characterized in that** means of fastening to a structural element are provided in the middle and at the ends of the bumper (22).

7. Assembly according to any one of the preceding claims, **characterized in that** the glass (14) is fastened to the unit (12) using bonding means.

8. Assembly according to any one of the preceding claims, **characterized in that** the upper wall (38) of the rim (29) is sloped, a rear end of the said wall (38) being higher than a front end of the said wall (38).

## Patentansprüche

1. Anordnung, die einen Scheinwerfer (10) und Mittel für die Unterstützung eines Kraftfahrzeug-Stoßfängers (22) enthält, wobei der Scheinwerfer (10) durch ein mit einer lichtdurchlässigen Scheibe (14) versehenes Gehäuse (12) gebildet ist und mit einem Strukturelement des Fahrzeugs fest verbunden ist, wobei ein unterer Teil (26) der lichtdurchlässigen Scheibe (14) einen Kante (29) aufweist, der mit einem oberen Teil (34) der lichtdurchlässigen Scheibe (14) eine Rinne (32) bildet, **dadurch gekennzeichnet, dass** die Mittel für die Unterstützung des Stoßfängers wenigstens ein angefügtes Trageteil (24) enthalten, das ein U-förmiges Profil aufweist, das mit der Kante (29) zusammenwirken kann, wobei sich eine obere Wand (36) des Trägers (24) an einer oberen Wand (38) der Kante (29) abstützt und außerdem Befestigungsmittel (45) vorgesehen sind, um das Trageteil (24) der lichtdurchlässigen Scheibe (14) fest zu verbinden, wobei das angefügte Trageteil (24) dazu ausgelegt ist, zwischen dem Scheinwerfer (10) und dem Stoßfänger (22) ein Spiel (J) zuzulassen, wobei der Stoßfänger (22) eine obere Kante (62) aufweist, die in der Rinne (62) aufgenommen sein kann und sich an der oberen Wand (36) des Trägers (24) in der Weise abstützt, dass die Positionierung des Stoßfängers (22) in Bezug auf den Scheinwerfer (10) von der Positionierung der lichtdurchlässigen Scheibe (14) in Bezug auf das Gehäuse (12) unabhängig ist.

2. Anordnung nach dem vorhergehenden Anspruch, **dadurch gekennzeichnet, dass** die Befestigung zwischen dem Träger (24) und der lichtdurchlässigen Scheibe (14) durch eine Schraube (56) gebildet ist, die dazu vorgesehen ist, in einem Loch (50), das in einem ersten Ansatz (48) ausgebildet ist, der sich von der Kante (29) der lichtdurchlässigen Scheibe (14) im Wesentlichen nach unten erstreckt, und in einem Gewindeschaft (54), der im wesentlichen longitudinal verläuft und nach vorn gerichtet ist und durch einen zweiten Ansatz (52) getragen wird, der sich von der unteren Fläche (40) des Trägers (24) nach unten erstreckt, aufgenommen zu werden.

3. Anordnung nach dem vorhergehenden Anspruch, **dadurch gekennzeichnet, dass** der Schaft (54) von zwei Versteifungsflügeln (60) des Trägers mit im Wesentlichen longitudinaler Orientierung eingerahmt ist.

4. Anordnung nach einem der Ansprüche 2 bis 3, **dadurch gekennzeichnet, dass** eine obere Kante (62) des Stoßfängers (22) in der Rinne (32) aufgenommen ist und sich an der oberen Wand (36) des Trägers (24) in der Weise abstützt, dass das Spiel (J) zwischen der Kante (62) des Stoßfängers (22) und einer oberen Wand (64) der Rinne (32) vorhanden ist.

5. Anordnung nach dem vorhergehenden Anspruch, **dadurch gekennzeichnet, dass** die obere Wand (36) des Trägers (24) Stege (44) mit im Wesentlichen longitudinaler Orientierung aufweist, um die vertikale Indexierung des Stoßfängers (22) sicherzustellen.

6. Anordnung nach einem der vorhergehenden Ansprüche, **dadurch gekennzeichnet, dass** im Mittelteil und an den Enden des Stoßfängers (22) Mittel für die Befestigung an einem Strukturelement vorgesehen sind.

7. Anordnung nach einem der vorhergehenden Ansprüche, **dadurch gekennzeichnet, dass** die lichtdurchlässige Scheibe (14) an dem Gehäuse (12) durch Klebemittel befestigt ist.

8. Anordnung nach einem der vorhergehenden Ansprüche, **dadurch gekennzeichnet, dass** die obere Wand (38) der Kante (29) eine Steigung aufweist, wobei ein hinteres Ende der Wand (38) höher ist als ein vorderes Ende der Wand (38).
